# EUROPEAN PATENT APPLICATION

(11) **EP 4 414 203 A1**
(43) Date of publication of application: **14.08.2024**
(21) Application number: 24157295.7
(22) Date of filing: 13.02.2024
(51) Int. Cl.: B60L 3/12, B60L 53/62, B60L 58/13, B60L 58/15, B60L 3/00, G01R 31/387, G06N 20/00

(54) **A METHOD CHARGING AN ELECTRIC VEHICLE AND THE ELECTRIC VEHICLE APPLYING THE METHOD**

(30) Priority: 13.02.2023 KR 20230018984
(71) Applicant: Korea Institute of Energy Technology, Jeollanam-do 58330 (KR)
(72) Inventor: SONG, Juhyun, Jeollanam-do (KR); NOH, Youngtae, Gyeonggi-do (KR); LEE, Yonggeon, Seoul (KR)
(74) Representative: Appleyard Lees IP LLP

(57) **Abstract**

An electric vehicle charging method and an electric vehicle using the electric vehicle charging method are provided. The electric vehicle charging method includes obtaining, from an external electronic device, human data including pre-departure behavioral and environmental indicators of a person, extracting information on departure time from the human data, and predicting a charging end time of a battery of an electric vehicle based on the human data.

## Description

### CROSS-REFERENCE TO RELATED APPLICATION

This application is based on and claims priority under 35 U.S.C. §119 to Korean Patent Application No. 10-2023-0018984, filed on February 13, 2023, and Korean Patent Application No. 1 0-2024-0020278, filed on February 13, 2024, in the Korean Intellectual Property Office, the disclosures of which are incorporated by reference herein in their entireties.

### BACKGROUND

### 1. Field

The present disclosure relates to an electric vehicle charging method and an electric vehicle using the electric vehicle charging method. Specifically, the present disclosure relates to a technology for efficiently controlling charging of an electric vehicle by predicting the departure time of the electric vehicle by using human data.

The present research was conducted with support from the Samsung Future Technology Promotion Project (Project Number: 202200016L).

### 2. Description of the Related Art

An electric vehicle (EV) is powered and travels using electrical energy stored in a battery. Compared to existing vehicles, electric vehicles have the advantages of being more environmentally friendly, generating less noise while traveling, and accelerating faster. Recently, as the number of charging stations capable of charging electric vehicles has increased, an environment in which electric vehicles may travel smoothly has been created. As the travel environment for electric vehicles has been established, the electric vehicle market is growing rapidly.

In order to ensure that electric vehicles travel smoothly for a long time, it is important to manage the capacity and charging states of batteries provided in the electric vehicles. In order to reduce the maintenance costs of electric vehicles and also reduce the amount of scrap batteries, it is important to increase the lifespan of batteries.

While charging batteries of electric vehicles, when states in which the batteries are fully charged continue for a long time, the batteries may be degraded and the lifespan of the batteries may be reduced. In a case where a battery is not fully charged when an electric vehicle departs, a distance that the electric vehicle may travel until the next charge of the electric vehicle may be reduced. Accordingly, there is a need to increase both a battery lifespan and travel range of an electric vehicle by charging the battery as fully as possible when the electric vehicle departs while reducing the time when a state in which the battery is fully charged is maintained as much as possible.

### SUMMARY

Additional aspects will be set forth in part in the description which follows and, in part, will be apparent from the description, or may be learned by practice of the presented embodiments of the disclosure.

An electric vehicle charging method according to an embodiment of the present disclosure may include obtaining, from an external electronic device, human data including pre-departure behavioral and environmental indicators of a person, extracting information on departure time from the human data, and predicting a charging end time of a battery of the electric vehicle based on the human data.

An electric vehicle according to an embodiment of the present disclosure may include a drive module, a battery, and a processor wherein the processor may be configured to obtain, from an external electronic device, human data including pre-departure behavioral and environmental indicators of a person, extract information on a departure time from the human data, and predict a charging end time of the battery of the electric vehicle based on the human data.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram illustrating an electric vehicle according to an embodiment of the present disclosure;
FIG. 2A is a graph illustrating a first situation in which a battery of an electric vehicle is generally fully charged and a second situation in which the battery of the electric vehicle is delayed-fully charged, according to an embodiment of the present disclosure;
FIG. 2B is a graph illustrating a lifespan of a battery according to a situation in which a battery of an electric vehicle is fully charged, according to an embodiment of the present disclosure;
FIG. 2C is a graph illustrating a case where a time when an electric vehicle departs is incorrectly predicted when a battery of the electric vehicle is delayed-fully charged, according to an embodiment of the present disclosure;
FIG. 3 is a diagram illustrating that training data is obtained to charge an electric vehicle and a variable required for a charging algorithm is predicted through a model, according to an embodiment of the present disclosure;
FIG. 4 is a graph illustrating a classification probability according to date of training data obtained to charge an electric vehicle according to an embodiment of the present disclosure;
FIG. 5 illustrates graphs showing densities obtained by applying various learning models to verification data to charge an electric vehicle for each of weekdays and weekends, according to an embodiment of the present disclosure;
FIG. 6 is a diagram illustrating objects according to error time of training data obtained to charge an electric vehicle according to an embodiment of the present disclosure;
FIG. 7 is a flowchart illustrating a method of predicting a departure time of an electric vehicle by obtaining training data to charge the electric vehicle according to an embodiment of the present disclosure;
FIG. 8 is a flowchart illustrating a method of strengthening a model for predicting a departure time of an electric vehicle by using training data obtained to charge the electric vehicle according to an embodiment of the present disclosure; and
FIG. 9 is a graph illustrating a method of improving an algorithm for delaying-fully charging an electric vehicle, according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Descriptions of the following embodiments should not be construed as limiting the scope of rights, and what those skilled in the art may easily infer should be interpreted as falling within the scope of rights of the embodiments. Hereinafter, embodiments for only illustrative purposes are described in detail with reference to the attached drawings.

Hereinafter, example embodiments are described in detail with reference to the attached drawings. In the following drawings, the same reference numerals refer to the same components, and sizes of respective components in the drawings may be exaggerated for clarity and convenience of description. Meanwhile, the embodiments described below are merely illustrative, and various modifications may be made from the embodiments.

Hereinafter, the term "above" or "on" may include not only components immediately above, below, left, and right in contact, but also components above, below, left, and right in a non-contact manner. Singular expressions may include plural expressions, unless the context clearly indicates otherwise. Alternatively, when it is described that a portion may "include" a certain component, this may mean that the portion may further include other components rather than excluding other components, unless specifically stated to the contrary.

The use of a term "above" and similar referential terms may refer to both the singular and the plural. Unless the order of steps included in a method is clearly stated or stated to the contrary, the steps may be performed in any appropriate order and are not limited to the described order.

Alternatively, terms, such as "...portion" and "module" given in the description refer to a unit for processing at least one function or operation, which may be implemented by hardware, software, or a combination of hardware and software.

Connections of lines between components illustrated in the drawings or connection members exemplify functional connections and/or physical or circuit connections and may be represented by a variety of alternative or additional functional connections, physical connections, or circuit connections in an actual device.

An expression, such as "at least one" preceding a list of components, limits the entire list of components and does not limit individual components in the list. For example, expressions, such as "at least one of A, B, and C" or "at least one selected from a group consisting of A, B, and C" may be construed as only A, only B, only C, or a combination of two or more of A, B, and C, such as ABC, AB, BC, or AC.

When "about" or "substantially" is used in connection with a numerical value, the relevant numerical value may be construed to include a manufacturing or operating variation (for example, ±10 %) around the stated numerical value. Alternatively, when the terms "generally" and "substantially" are used with reference to a geometric shape, it can be intended that geometrical constraints are not required and that latitude for a shape is within the scope of the present embodiment. Alternatively, regardless of whether the numerical value or shape is limited to "about" or "substantially", such numerical value and shape may be construed to include a manufacturing or operating variation (for example, ±10 %) around the stated numerical value.

Terms, such as first, second, and so on may be used to describe various components, but the components may not be limited by terms. Terms may be used only to distinguish one component from another.

The use of all examples or illustrative terms is simply for illustrating the technical idea in detail, and the scope is not limited by the examples or illustrative terms unless limited by the claims.

Hereinafter, detailed descriptions may be made by way of example only, with reference to the attached drawings.

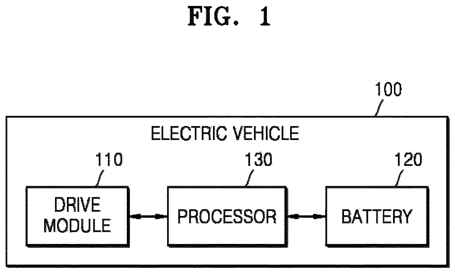

FIG. 1 is a block diagram illustrating an electric vehicle (EV) 100 according to an embodiment of the present disclosure. The electric vehicle 100 according to the embodiment may include a drive module 110, a battery 120, and a processor 130.

The drive module 110 may transmit power to a body and wheels of the electric vehicle 100 such that the electric vehicle 100 travels. The drive module 110 may transmit power to the wheels of the electric vehicle 100 to rotate the wheels under control of the processor 130.

The battery 120 may transmit power to the drive module 110. The battery 120 may transfer electrical energy to the drive module 110 under control of the processor 130.

The processor 130 may control the entire operation of the electric vehicle 100. The processor 130 may control the entire travel and power transmission of the electric vehicle 100 by controlling the drive module 110. The processor 130 may control the power flow of the electric vehicle 100. The processor 130 may cause the battery 120 to control the amount of electrical energy transferred from the battery 120 to the drive module 110.

The capacity of the battery 120 of the electric vehicle 100 may decrease while repeating discharging and charging as the electric vehicle 100 travels. For example, when discharging and charging of the battery 120 are repeated 600 number of times (cycles), the capacity of the battery 120 may decrease by about 10 % on average compared to an initial capacity. When the capacity of the battery 120 decreases below a critical ratio compared to the initial capacity, it can be determined that a lifespan of the battery 120 reaches the end of life. In order to increase a lifespan of the battery 120, it is necessary to delay a point at which the capacity of the battery 120 decreases below a critical ratio.

The lifespan of the battery 120 of the electric vehicle 100 may decrease as the time for maintaining a fully-charged state increases. For example, the longer the battery 120 remains in a fully-charged state when charging, a rate at which the capacity of the battery 120 decreases may increase by about 20 times on average. In order to increase the lifespan of the battery 120, it is necessary to reduce the time for maintaining a fully-charged state when charging the battery 120.

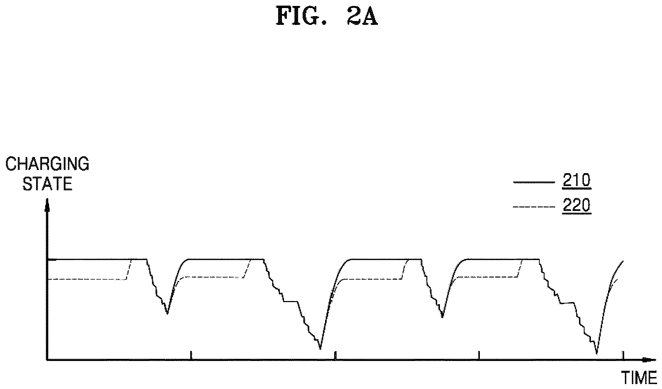

FIG. 2A is a graph illustrating a first situation 210 in which the battery 120 of the electric vehicle 100 is generally fully charged and a second situation 220 in which the battery 120 of the electric vehicle 100 is delayed-fully charged, according to an embodiment of the present disclosure.

When the battery 120 of the electric vehicle 100 is generally fully charged as in the first situation 210, the time for maintaining the fully-charged state may increase. When the battery 120 of the electric vehicle 100 is generally fully charged as in the first situation 210, a lifespan of the battery 120 may decrease more rapidly.

When the battery 120 of the electric vehicle 100 is delayed-fully charged as in the second situation 220, the time for maintaining the fully-charged state may decrease. When the battery 120 of the electric vehicle 100 is generally fully charged as in the first situation 210, a lifespan of the battery 120 may be extended compared to the first situation 210.

The performance and lifespan of the battery 120 of the electric vehicle 100 may gradually decrease while charging and discharging cycles are repeated. When the lifespan of the battery 120 decreases rapidly, various issues may occur, such as a decrease in travel range of the electric vehicle 100, an increase in maintenance cost of the electric vehicle 100, and environmental problems. In particular, the time when the battery 120 is maintained in a fully-charged state (fully-charged state time, t_{100%}) may be a major factor that accelerates degradation of the battery 120. As the time when the battery 120 is maintained in a fully-charged state increases, a degradation rate of the battery 120 may increase.

In order to reduce the degradation rate of the battery 120, the processor 130 of the electric vehicle 100 may apply a delay-full charging algorithm based on artificial intelligence as in the second situation 220 to a battery management system (BMS) that manages the battery 120. When the processor 130 applies the delay-full charging algorithm, the processor 130 may actively control the fully-charged state time t_{100%} through the delay-full charging algorithm. The processor 130 may decrease the time when the battery 120 is maintained in the fully-charged state through the delay-full charging algorithm. The processor 130 may reduce the degradation rate of the battery 120.

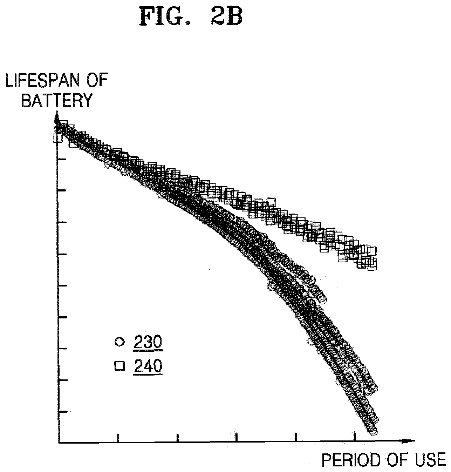

FIG. 2B is a graph illustrating a lifespan of the battery 120 according to a situation in which the battery 120 of the electric vehicle 100 is fully charged, according to an embodiment of the present disclosure.

In a normal fully-charging situation 230, the lifespan of the battery 120 may rapidly decrease as a period of use increases. As the time for which the battery 120 is maintained in a fully-charged state increases, a ratio of the capacity, to which the battery 120 may be fully charged, to the initial capacity of the battery 120 may rapidly decrease. As the time when the battery 120 is maintained in a fully-charged state increases, the lifespan of the battery 120 may rapidly decrease.

In a delay-fully-charging situation 240, the lifespan of the battery 120 may decrease more slowly than in the normal fully-charging situation 230 as the period of use increases. As the time when the battery 120 is maintained in a fully-charged state decreases, a ratio of the capacity, to which the battery 120 may be fully charged, to the initial capacity of the battery 120 may slowly decrease. As the time when the battery 120 is maintained in a fully-charged state decreases, the lifespan of the battery 120 may slowly decrease.

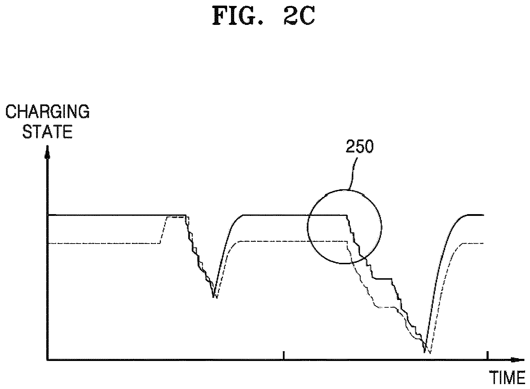

FIG. 2C is a graph illustrating a case where the time when the electric vehicle 100 departs is incorrectly predicted when the battery 120 of the electric vehicle 100 is delayed-fully charged, according to an embodiment of the present disclosure.

When the battery 120 of the electric vehicle 100 is delayed-fully charged, the battery 120 may be fully charged at the time when the electric vehicle 100 departs. The departure time of the electric vehicle 100 has to be accurately predicted to fully charge the battery 120 at the departure time of the electric vehicle 100. When an error 250 occurs in predicting the departure time of the electric vehicle 100, the battery 120 may not be fully charged at the departure time of the electric vehicle 100.

The processor 130 of the electric vehicle 100 may control a state of charge (SOC) of the battery 120 by using a delay-full charging algorithm. The processor 130 may predict a charging end time t_{unplug} to control ae charging state of the battery 120 by using the delay-full charging algorithm. The charging end time t_{unplug} may be the time when charging of the electric vehicle 100 ends and the electric vehicle 100 departs. The charging end time t_{unplug} may be the time when the electric vehicle 100 is expected to start to travel.

When the charging end time t_{unplug} predicted by the processor 130 is earlier than an actual departure time of the electric vehicle 100, the time when the battery 120 is maintained in a fully-charged state is unnecessarily increase, which causes the battery 120 to be degraded. When the charging end time t_{unplug} predicted by the processor 130 is later than the actual departure time of the electric vehicle 100, the electric vehicle 100 departs in a state where the battery 120 is not fully charged, and accordingly, a travel range of the electric vehicle 100 may decrease. Therefore, in order to increase the efficiency of the delay-full charging algorithm, it is important for the processor 130 to accurately predict the departure time of the electric vehicle 100, that is, to accurately predict the charging end time t_{unplug}.

The charging end time t_{unplug} of the electric vehicle 100 may be determined by the departure time of the electric vehicle 100. The general method of modeling a departure time of the electric vehicle 100 is a method of generating a learning model by learning time-series characteristics of a departure time pattern, or a method of probabilistically determining the departure time by learning demographic characteristics affecting the departure time of the electric vehicle 100. However, the method of generating the learning model by learning the time-series characteristics of the departure time pattern has a problem that it is difficult to easily learn data with weak time-series characteristics, and the method of determining the departure time by learning demographic characteristics has a problem that it is difficult to reflect personal characteristics of each user of the electric vehicle 100 and survey results have to be received directly from a user of the electric vehicle 100.

The present disclosure provides a method of more accurately predicting a departure time of the electric vehicle 100 by utilizing human data collected from external electronic devices, such as mobile terminals or wearable devices. Also, the present disclosure provides a method of training an artificial intelligence model that may interpret personalized data automatically collected from an external electronic device regardless of time-series characteristics.

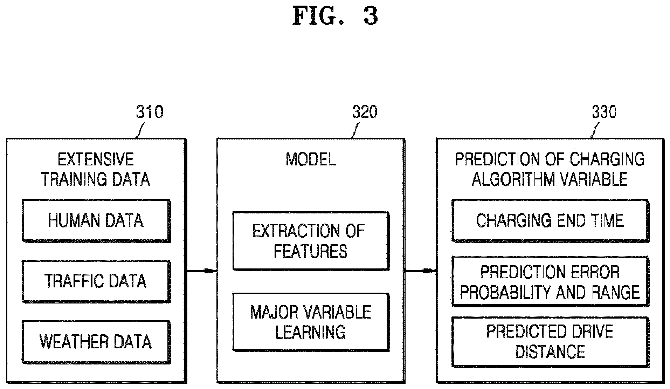

FIG. 3 is a diagram illustrating that training data 310 is obtained to charge the electric vehicle 100 and a variable 330 required for a charging algorithm is predicted through a model 320, according to an embodiment of the present disclosure. The training data 310 may be referred to as extensive training data 310.

The processor 130 of the electric vehicle 100 may build a database (DB) for operating the electric vehicle 100. The processor 130 may build a database for operating the electric vehicle 100 by using synthetic data. The processor 130 may perform microsimulation based on high-level data.

The processor 130 may obtain the training data 310. The training data 310 may include human data, traffic data, and weather data.

The human data may include pre-start cognitive behavioral and situational indicators of a person. The human data may include meaningful characteristics that represent pre-start behavioral and environmental indicators of a person. The human data may include life logging data. The human data may include mobile passive data. The human data may be collected from external electronic devices, such as mobile terminals or wearable devices. The processor 130 may collect the human data and extract pre-start cognitive behavioral and situational indicators of a person. The processor 130 may predict the charging end time t_{unplug} of the electric vehicle 100 based on the human data.

The processor 130 may obtain human data including at least one of activity, a step, important motion, phone call, a screen state, unlock event, application usage status, ambient light, ambient sound, and positional information collected from external electronic devices.

The processor 130 may obtain the human data while removing errors based on time sequence, redundancy, and outlier criteria. The processor 130 may remove data collected in reverse chronological order. The processor 130 may remove data that is inferred to have been collected at the same time. The processor 130 may remove data that is extremely outside of a generally acceptable range.

The processor 130 may label latitude and longitude of the electric vehicle 100 based on positional information collected from an external electronic device. The processor 130 may collect the latitude and longitude of the electric vehicle 100 based on global positioning system (GPS) information collected from an external electronic device. The processor 130 may analyze the latitude and longitude of the electric vehicle 100 by using a point of Interest (Pol) clustering method. The processor 130 may label a position of the electric vehicle 100 based on an analysis result. For example, the processor 130 may label a cluster that appears most often during sleep hours (for example, 11 PM to 7 AM the next day) as a "house". For example, the processor 130 may label a cluster that appears most often in all time periods as a "workplace", excluding the cluster labeled as the "house". For example, the processor 130 may exclude user data estimated to be a long-term trip or business trip from analysis for labeling.

The processor 130 may generate an algorithm to obtain the departure time from home based on the labeled latitude and longitude. The processor 130 may identify a "house" sequence that appears for each date from the labeled GPS information. The processor 130 may define a timestamp log of the last sample of the "house" sequence for each date as the departure time of a relevant date. The processor 130 may exclude a relevant sample when a label of the sample collected immediately after the last sample of the "house" sequence is "none", or when an interval between two samples of the "house" sequence exceeds a threshold time (for example, 15 minutes).

The processor 130 may label a position collected from an external electronic device by using pseudocode and predict a departure time of the electric vehicle 100 from a house. For example, the processor 130 may use the following pseudocode.

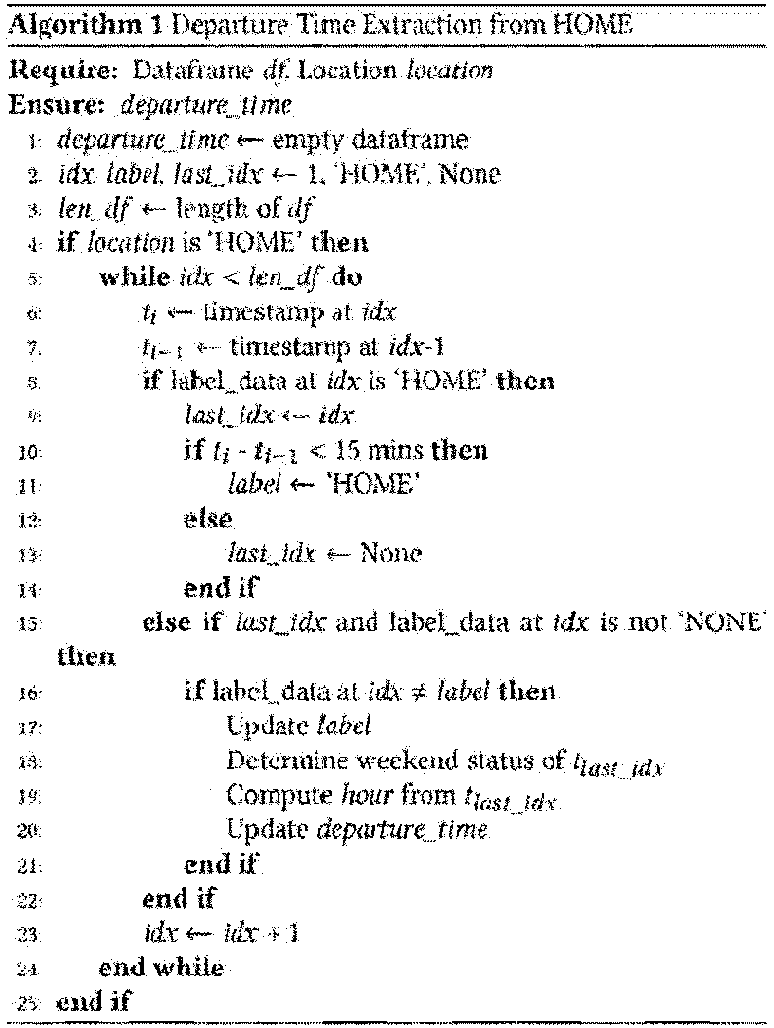

The processor 130 may extract information related to the departure time of the electric vehicle 100 from human data collected from an external electronic device. The processor 130 may collect the human data at each of desired time intervals (for example, 20 minutes) or when a certain condition is made. The processor 130 may extract information on a departure time of the electric vehicle 100 by using a feature engineering process. The processor 130 may extract information on the departure time of the electric vehicle 100 by using a user's behavioral and environmental indicators before departure of the electric vehicle 100. The processor 130 may analyze a correlation between human data and departure time by using a feature engineering process.

The processor 130 may extract information on the departure time from human data collected from an external electronic device by using the feature engineering process. For example, the processor 130 may extract characteristics shown in Table 1 from human data collected from an external electronic device by using the feature engineering process.

**Table 1**

| Human data | Extracted characteristics |
|---|---|
| Behavioral data | |
| Activity type | Detected activity type |
| | Duration of each activity type |
| | Proportion of each activity type |
| | Duration of first activity sample |
| Step | Step count |
| | Step duration |
| | Duration of first step sample |
| Important motion | Detection count of important motion |
| | Time elapsed after previous important motion |
| | Duration of first important motion |
| phone call | Type of phone call |
| | Ratio of outgoing call to incoming call |
| | Duration of each call |
| | Frequency of calls |
| | Duration of first call |
| Screen state | Duration of screen state |
| | Count of screen on and screen off |
| | Count and duration of short screen |
| | Duration of first sample screen |
| | Entropy and normalized entropy of screen state |
| Unlock event | Unlock Duration |
| | Count of lock and unlock |
| | Duration of first unlock event |
| | Entropy of each of locked state and unlocked state |
| Application usage | Category of each used application |
| | Duration of each used application |
| | Frequency of use of application |
| | Usage time of first use application |
| | Entropy and normalized entropy of each application |

| Environmental data | |
|---|---|
| Ambient illuminance | Count of dark environment |
| | Lowest illuminance, highest illuminance, average illuminance, standard deviation of illuminance |
| Ambient sound | Least loudness, greatest loudness, average loudness, standard deviation of loudness |

The processor 130 may detect abnormal values of the predicted departure time probability distribution in real time by using a database scanning technique. The processor 130 may generate an algorithm that determines optimized parameters (MinPts) and epsilon required to detect abnormal values for each individual and date through a knee point. The processor 130 may train a classifier for information on the departure time extracted from human data by using machine learning and deep learning methods. The classifier may receive human data from an external electronic device and determine whether the electric vehicle 100 departs.

The processor 130 detects abnormal values of the departure time prediction probability distribution in real time by using pseudocode. Through the knee point, the optimized parameters (MinPts) and epsilon required for each individual and date may be determined. For example, the processor 130 may use the following pseudocode.

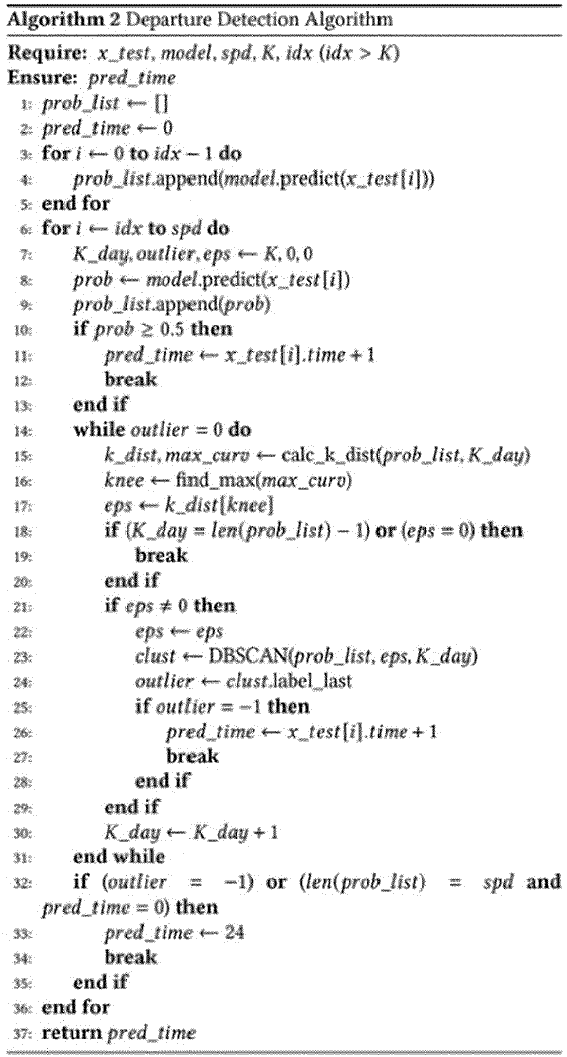

Traffic data may include traffic statistics. Meteorological data may include data related to at least one of weather, temperature, precipitation, and humidity.

The processor 130 may generate the model 320 by using the training data 310. The model 320 may include a vehicle motion model and a battery model. The vehicle motion model may include a daily travel status of the electric vehicle 100. The battery model may include a charging status of the electric vehicle 100 and charging conditions of the electric vehicle 100.

The processor 130 may generate a synthetic drive pattern 330 by using the generated model 320. The synthetic drive pattern may include a voltage pattern, a current pattern, and a charging state pattern. The voltage pattern may include an output voltage status of the electric vehicle 100. The current pattern may include an output current status of the electric vehicle 100. The charging state pattern may include information on a charging state of the battery 120 of the electric vehicle 100.

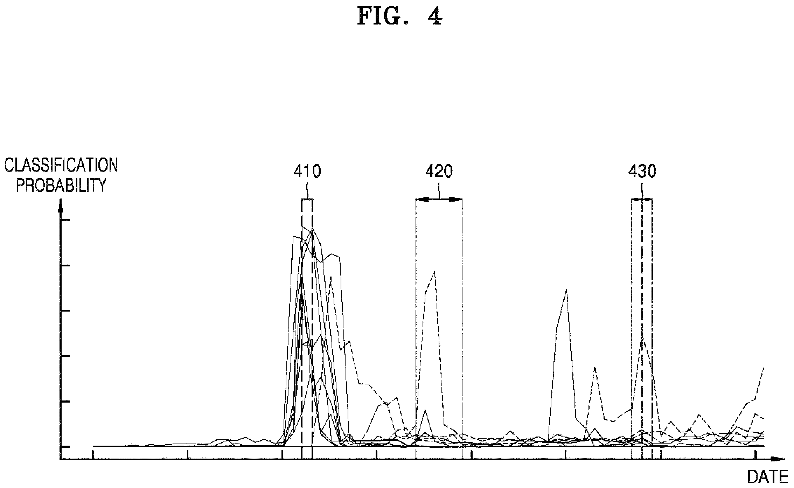

FIG. 4 is a graph illustrating a classification probability according to date of training data obtained to charge the electric vehicle 100 according to an embodiment of the present disclosure.

The processor 130 of the electric vehicle 100 may obtain training data for each date. For example, the processor 130 may obtain the training data for each day index. The date index may refer to each prediction point when predictions are made at regular intervals (for example, 20 minutes) for 24 hours every day. The processor 130 may derive classification probability of the training data obtained for each date. The processor 130 may detect first data 410, second data 420, and third data 430 in which the classification probability is greater than or equal to a threshold, as abnormal values.

The processor 130 may predict a departure time of the electric vehicle 100 by training a classifier with human data. The classifier may derive classification probability for a determination result of the human data. The classifier may detect a case where probability for a certain sample suddenly increases by using a database scanning technique. The classifier may detect a sudden increase in probability by using a density or distance-based clustering technique by defining the sudden increase in probability as an abnormal value.

The processor 130 may obtain minimum samples (MinPts) and an epsilon value for defining a dense region and key point by using the database scanning technique. The processor 130 may derive minimum samples optimized for a user through a k-distance graph. The processor 130 may calculate an appropriate epsilon value for each date through a knee point. The processor 130 may predict the departure time of the electric vehicle 100 by calculating an appropriate epsilon value for each day and actively analyzing different probability distributions for each individual and date.

The processor 130 may learn human data for each date by using a gradient boosting decision trees (GBDT) model. The GBDT model is a type of machine learning model and may have high performance in terms of accuracy, efficiency, and interpretability. The processor 130 may perform learning by using various GBDT models. For example, the processor 130 may learn human data for each date by using a GBDT model, such as a LightGBM model, an XGBoost model, a CatBoost model, or a RandomForest model. However, the embodiment is not limited thereto, and the processor 130 may learn human data for each date by using various GBDT models other than the models described above. The GBDT models may have individual growth characteristics. The XGBoost model may do level-wise tree growth, and the LightGBM model may do leaf-wise tree growth. Learning results of the LightGBM model, XGBoost model, CatBoost model, and RandomForest model may be summarized as illustrated in Table 2 below.

**Table 2**

| | LightGBM | CatBoost | XGBoost | RandomForest |
|---|---|---|---|---|
| All days | 2.76 | 3.55 | 3.13 | 4.13 |
| Weekdays | 2.18 | 3.06 | 2.57 | 3.62 |
| Weekends | 4.46 | 4.97 | 4.78 | 5.62 |

The processor 130 may summarize the learning results for each GBDT model. The processor 130 may calculate a mean absolute error (MAE) for each GBDT model. The mean absolute error may refer to a difference between the departure time of the electric vehicle 100 predicted by the GBDT model and an actual departure time of the electric vehicle 100. A unit of the mean absolute error may be hour. The processor 130 may compare performances of respective GBDT models based on the mean absolute error. For example, the processor 130 may determine that the LightGBM model with the smallest mean absolute error has the highest performance based on the results in Table 2.

The processor 130 may summarize learning results for each GBDT model for each of all days, weekdays, and weekends, as shown in Table 2. For example, the processor 130 may derive that all GBDT models have lower performance on weekends than on weekdays because the electric vehicle 100 has an irregular departure time pattern on weekends.

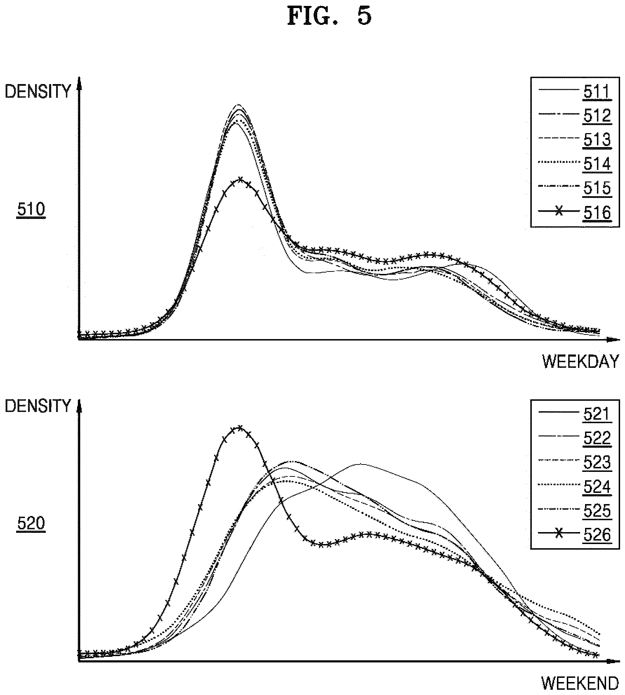

FIG. 5 illustrates graphs showing densities obtained by applying various learning models to verification data to charge the electric vehicle 100 for each of weekdays and weekends, according to an embodiment of the present disclosure. FIG. 5 illustrates examples of five learning models. However, the present disclosure is not limited thereto and may obtain densities for each of weekdays and weekends by applying various learning models other than the illustrated five models to verification data.

A first graph 510 shows densities for each weekday in results of applying training data to each of the five models by comparing with a ground truth. A second graph 520 shows densities for each weekend in results of applying training data to each of the five models by comparing with the ground truth.

The first graph 510 may include a ground truth 511, a LightGBM model 512, a CatBoost model 513, an XGBoost model 514, a RandomForest model 515, and a history 516. The second graph 520 may include a ground truth 521, a LightGBM model 522, a CatBoost model 523, an XGBoost model 524, a RandomForest model 525, and a history 526.

The first graph 510 and the second graph 520 may show kernel density estimation (KDE) plots resulting from applying the ground truth and training data to each of the five models. Results of the GBDT models 512 to 515 may be closer to the ground truth than the history model 526. Comparing the first graph 510 with the second graph 520, a normal distribution tendency may be stronger on a weekend than in weekdays. Accordingly, the presence of irregular patterns may be underscored on a weekend compared to weekdays.

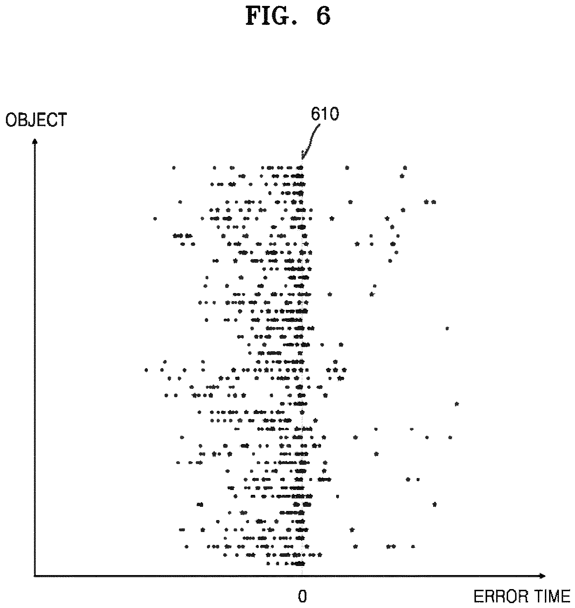

FIG. 6 is a diagram illustrating objects according to error time of training data obtained to charge the electric vehicle 100 according to an embodiment of the present disclosure.

The processor 130 of the electric vehicle 100 may predict a departure time of the electric vehicle 100. The processor 130 may compare the predicted departure time with an actual departure time of the electric vehicle 100. The processor 130 may compare the predicted departure time with the actual departure time of the electric vehicle 100 for each date and object. An error time may be a difference value between the predicted departure time of the electric vehicle 100 and the actual departure time thereof.

The object may be an individual data value for each situation when predicting the departure time of the electric vehicle 100. Objects may be distinguished from each other according to a learning model, a prediction date, a user, the type of electric vehicle 100, and so on. For example, when a learning model applied for prediction is changed, the processor 130 may determine the object to be another object and separate a measurement result. For example, when prediction days are respectively a weekday and a weekend, the processor 130 may determine that the objects are different from each other and separate the measurement results.

Referring to FIG. 6 which illustrates objects according to error time, it can be seen that the predicted departure time matches the actual departure time of the electric vehicle 100, and accordingly, the error time gradually approaches a baseline 610 in which the error time is 0. According to the present disclosure, when predicting the departure time of the electric vehicle 100 by using human data, the error time between the predicted departure time and the actual departure time of the electric vehicle 100 may be reduced. Accordingly, according to the present disclosure, when predicting the departure time of the electric vehicle 100 by using human data, the time when the battery 120 of the electric vehicle 100 is maintained in a fully-charged state is reduced, and thus, a degradation rate of the battery 120 may be reduced.

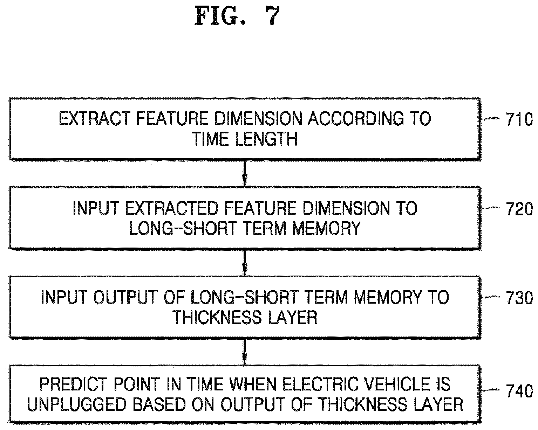

FIG. 7 is a flowchart illustrating a method of predicting a departure time of the electric vehicle 100 by obtaining training data to charge the electric vehicle 100 according to an embodiment of the present disclosure.

The processor 130 according to an embodiment may extract a feature dimension according to a time length in operation 710. The feature dimension may be a time unit with a continuous length extracted from a time length for each unit. The feature dimension may be a data unit for performing deep learning in memory.

The processor 130 according to an embodiment may input an extracted feature dimension to a long-short term memory in operation 720. The long-short term memory (LSTM) may be an artificial neural network model used for deep learning. The long-short term memory may include a plurality of layers. The long-short term memory may include a plurality of input values and a plurality of output values. The processor 130 may use respective extracted feature dimensions as the plurality of input values. The processor 130 may obtain a plurality of output values obtained by deep-learning the feature dimension in the long-short term memory.

The processor 130 according to an embodiment may input an output of the long-short term memory to a thickness layer in operation 730. The thickness layer (dense layer) may be formed through a plurality of processes for receiving a plurality of values and determining or extract one value. The processor 130 may determine a plurality of output values obtained by inputting a feature dimension to the long-short term memory as an output of the long-short term memory. The processor 130 may determine or extract one value among a plurality of output values by inputting the output of the long-short term memory to the thickness layer.

The processor 130 according to an embodiment may predict a point in time when the electric vehicle 100 is unplugged based on an output of the thickness layer in operation 740. The processor 130 may obtain one output value that is determined or extracted from among a plurality of output values from the thickness layer. The processor 130 may predict a departure time of the electric vehicle 100 based on one output value determined by or extracted from the thickness layer. The processor 130 may determine the departure time of the electric vehicle 100 as the point in time when the electric vehicle 100 is unplugged. The processor 130 may predict the departure time of the electric vehicle 100 based on one output value determined by or extracted from the thickness layer.

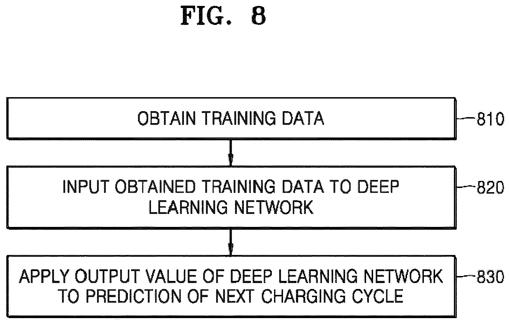

FIG. 8 is a flowchart illustrating a method of strengthening a model for predicting a departure time of the electric vehicle 100 by using training data obtained to charge the electric vehicle 100 according to an embodiment of the present disclosure.

The processor 130 according to an embodiment may obtain training data in operation 810. The training data may include human data, weather data, traffic data, data related to a state of the electric vehicle 100, and surrounding environment data.

The processor 130 according to an embodiment may input the obtained training data to a deep learning network in operation 820. The deep learning network may be a deep Q-Network (DQN). The processor 130 may input the training data to the deep learning network. The processor 130 may obtain the departure time of the electric vehicle 100 by processing the training data. The processor 130 may determine the departure time of the electric vehicle 100 as the time when the electric vehicle 100 is unplugged.

The processor 130 according to an embodiment may apply an output value of the deep learning network to prediction of the next charging cycle in operation 830. The processor 130 may process the output value of the deep learning network as a reward. The processor 130 may compare the predicted unplug point in time of the electric vehicle 100 with an actual departure point in time of the electric vehicle 100. The processor 130 may reflect a difference value between the predicted unplug point in time of the electric vehicle 100 and the actual departure point in time of the electric vehicle 100 in prediction of the next charging cycle.

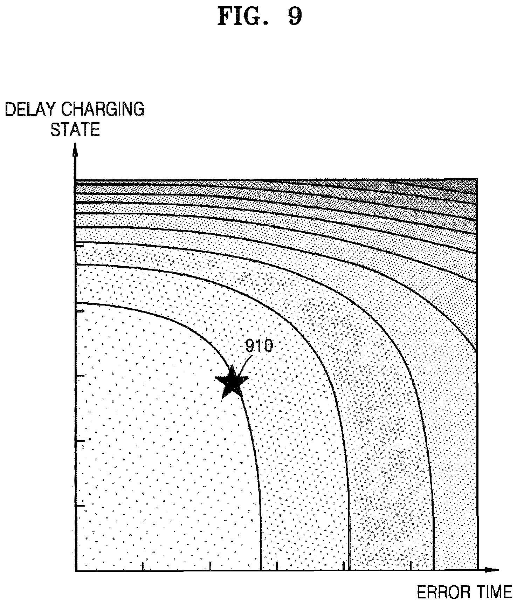

FIG. 9 is a graph illustrating a method of improving an algorithm for delaying-fully charging the electric vehicle 100, according to an embodiment of the present disclosure.

The processor 130 of the electric vehicle 100 may delay-fully charge the battery 120 of the electric vehicle 100 based on the predicted charging end time. The processor 130 may use a physics-based degradation model to delay-fully charge the battery 120. The physics-based degradation model may include an electrochemical-heat transfer model. The physics-based degradation model may include a degradation mechanism of the battery 120.

The processor 130 of the electric vehicle 100 may improve a delay-full charging algorithm based on the physics-based degradation model. The processor 130 may optimize the delay-full charging algorithm based on the physics-based degradation model. The processor 130 may apply an optimal parameter 910 to the physics-based degradation model. For example, the processor 130 may apply a delay charging state (SOC_{delay}) parameter and an error time (t_{margin}) to the physics-based degradation model. The delay charging state (SOC_{delay}) parameter may be a value by which a usable capacity of the battery 120 increases on average after a certain period of time (for example, 10 years). For example, the optimal parameter 910 may mean a case where a delay charging state is 76 % when the error time is 24 minutes. The processor 130 of the electric vehicle 100 may reduce a defect prediction rate of the electric vehicle 100 by using the optimal parameter 910. For example, the processor 130 of the electric vehicle 100 may reduce the defect prediction rate of the electric vehicle 100 to 10 ppm by using the optimal parameter 910.

The present disclosure provides a method of reducing degradation of a battery of an electric vehicle by controlling charging of the electric vehicle by accurately predicting a charging end time of the electric vehicle by using human data.

An electric vehicle charging method according to the present disclosure may include an operation of obtaining, from an external electronic device, human data including pre-departure behavioral and environmental indicators of a person, an operation of extracting information on departure time from the human data, and an operation of predicting a charging end time of the battery of the electric vehicle based on the human data.

The electric vehicle charging method according to the present disclosure may include an operation of labeling a latitude and longitude based on position information collected from the external electronic device, and an operation of predicting the departure time by generating an algorithm for obtaining the departure time from a house of the person based on the labeled latitude and longitude.

The operation of obtaining the human data according to the present disclosure may include an operation of obtaining the human data while removing errors based on time sequence, redundancy, and outlier criteria.

The electric vehicle charging method according to the present disclosure may include an operation of detecting an abnormal value in a departure time prediction probability distribution in real time by using a database scanning technique, and an operation of determining parameters necessary for the database scanning technique for each individual and date through a knee point.

The electric vehicle charging method according to the present disclosure may include an operation of obtaining minimum samples (min samples, MinPts) and an epsilon value for defining a dense region and key point by using the database scanning technique.

The electric vehicle charging method according to the present disclosure may include an operation of learning the human data for each date by using a gradient boosting decision trees (GBDT) model.

The electric vehicle charging method according to the present disclosure may include an operation of summarizing learning results for each GBDT model for all days, weekdays, and weekends.

An electric vehicle according to the present disclosure may include a drive module, a battery, and a processor, wherein the processor may be configured to obtain, from an external electronic device, human data including pre-departure behavioral and environmental indicators of a person, extract information on departure time from the human data, and predict a charging end time of the battery of the electric vehicle based on the human data.

The processor according to the present disclosure may be further configured to label a latitude and longitude based on position information collected from the external electronic device and predict the departure time by generating an algorithm for obtaining the departure time from a house of the person based on the labeled latitude and longitude.

The processor according to the present disclosure may be further configured to obtain the human data while removing errors based on time sequence, redundancy, and outlier criteria.

The processor according to the present disclosure may be further configured to detect an abnormal value in a departure time prediction probability distribution in real time by using a database scanning technique, and determine parameters necessary for the database scanning technique for each individual and date through a knee point.

The processor according to the present disclosure may be further configured to obtain minimum samples (min samples, MinPts) and an epsilon value for defining a dense region and key point by using the database scanning technique.

The processor according to the present disclosure may be further configured to learn the human data for each date by using a gradient boosting decision trees (GBDT) model.

The processor according to the present disclosure may be further configured to summarize learning results for each GBDT model for all days, weekdays, and weekends.

A recording medium according to the present disclosure may include instructions that are executable by a computer, wherein the instructions may obtain, from an external electronic device, human data including pre-departure behavioral and environmental indicators of a person, extract information on departure time from the human data, and predict a charging end time of the battery of the electric vehicle based on the human data.

The present disclosure may increase a lifespan of a battery of an electric vehicle by accurately delaying-fully charging the battery of the electric vehicle to meet a departure time of the electric vehicle by accurately predicting the departure time of the electric vehicle by using a user's human data.

The method according to an embodiment of the present disclosure may be implemented in the form of program instructions that may be executed by various computers and recorded on a computer-readable medium. The computer-readable medium may include program instructions, data files, data structures, or so on, combinations thereof. The program instructions recorded on the medium may be specially designed and configured for the present disclosure or may be known and available to those skilled in the art of computer software. Examples of computer-readable recording media include magnetic media, such as hard disks, floppy disks, and magnetic tapes, optical media, such as CD-ROMs and DVDs, magneto-optical media, such as floptical disks, and hardware devices, which specifically configured to store and execute program instructions, such as ROM, RAM, and flash memory. The examples of program instructions include not only machine language code that may be generated by a compiler, but also high-level language code that may be executed by a computer using an interpreter or so on.

Some embodiments of the present disclosure may also be implemented in the form of a recording medium including instructions that may be executed by a computer, such as program modules executed by a computer. The computer-readable media may be any available media that may be accessed by a computer and includes both volatile and non-volatile media and removable and non-removable media. Also, the computer-readable media may include both computer storage media and communication media. The computer storage media includes both volatile and non-volatile media and removable and non-removable media that are implemented by any method or technology for storage of information, such as computer-readable instructions, data structures, program modules, or other data. The communication media typically include computer readable instructions, data structures, program modules, other data of a modulated data signal, such as a carrier wave, or other transmission mechanism and include any information transfer media. Also, some embodiments of the present disclosure may also be implemented by a computer program or a computer program product that includes instructions executable by a computer, such as a computer program executed by the computer.

A storage medium that may be read by a device may be provided in the form of a non-transitory storage medium. Here, the 'non-transitory storage medium' simply means a tangible device and no inclusion of signals (for example, electromagnetic waves), and this term does not distinguish between a case where data is stored semi-permanently in a storage medium and a case where data is temporarily stored. For example, the 'non-transitory storage medium' may include a buffer where data is temporarily stored.

According to an embodiment, methods according to various embodiments disclosed in the present document may be provided by being included in a computer program product. The computer program product is commodity and may be traded between a seller and a buyer. The computer program product may be distributed in the form of a machine-readable storage medium (for example, a compact disc read only memory (CD-ROM)) or may be distributed (for example, downloaded or uploaded) online through an application store or directly between two user devices (for example, smartphones). In a case of online distribution, at least a part of the computer program product (for example, a downloadable app) may be temporarily stored or temporarily generated in a machine-readable storage medium, such as a server of a manufacturer, a server of an application store, or a memory of a relay server.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. An electric vehicle charging method comprising:
obtaining, from an external electronic, device human data including pre-departure behavioral and environmental indicators of a person;
extracting information on a departure time from the human data; and
predicting a charging end time of a battery of the electric vehicle based on the human data.

2. The electric vehicle charging method of claim 1, further comprising:
labeling a latitude and longitude based on position information collected from the external electronic device; and
predicting the departure time by generating an algorithm for obtaining the departure time from a house of the person based on the labeled latitude and longitude.

3. The electric vehicle charging method of claim 1, wherein the obtaining of the human data includes obtaining the human data while removing errors based on time sequence, redundancy, and outlier criteria.

4. The electric vehicle charging method of claim 1, further comprising:
detecting an abnormal value in a departure time prediction probability distribution in real time by using a database scanning technique; and
determining parameters necessary for the database scanning technique for each individual and date through a knee point.

5. The electric vehicle charging method of claim 4, further comprising obtaining minimum samples (min samples, MinPts) and an epsilon value for defining a dense region and a key point by using the database scanning technique.

6. The electric vehicle charging method of claim 1, further comprising learning the human data for each date by using a gradient boosting decision trees (GBDT) model.

7. The electric vehicle charging method of claim 6, further comprising summarizing learning results for each GBDT model for all days, weekdays, and weekends.

8. An electric vehicle comprising:
a drive module;
a battery; and
a processor,
wherein the processor is configured to obtain, from an external electronic device, human data including pre-departure behavioral and environmental indicators of a person, extract information on a departure time from the human data, and predict a charging end time of the battery of the electric vehicle based on the human data.

9. The electric vehicle of claim 8, wherein the processor is further configured to label a latitude and longitude based on position information collected from the external electronic device, and predict the departure time by generating an algorithm for obtaining the departure time from a house of the person based on the labeled latitude and longitude.

10. The electric vehicle of claim 8, wherein the processor is further configured to obtain the human data while removing errors based on time sequence, redundancy, and outlier criteria.

11. The electric vehicle of claim 8, wherein the processor is further configured to detect an abnormal value in a departure time prediction probability distribution in real time by using a database scanning technique, and determine parameters necessary for the database scanning technique for each individual and date through a knee point.

12. The electric vehicle of claim 11, wherein the processor is further configured to obtain minimum samples (min samples, MinPts) and an epsilon value for defining a dense region and a key point by using the database scanning technique.

13. The electric vehicle of claim 8, wherein the processor is further configured to learn the human data for each date by using a gradient boosting decision trees (GBDT) model.

14. The electric vehicle of claim 13, wherein the processor is further configured to summarize learning results for each GBDT model for all days, weekdays, and weekends.

15. A recording medium comprising:
instructions executable by a computer,
wherein the instructions include:
obtaining, from an external electronic device, human data including pre-departure behavioral and environmental indicators of a person,
extracting information on a departure time from the human data, and
predicting a charging end time of a battery of an electric vehicle based on the human data.
